# EUROPÄISCHE PATENTSCHRIFT

(11) **EP 0 459 091 B1**
(45) Veröffentlichungstag und Bekanntmachung des Hinweises auf die Patenterteilung: **11.05.1994**
(21) Anmeldenummer: 91103255.5
(22) Anmeldetag: 05.03.1991
(51) Int. Cl.: B23K 11/30, H01R 39/64

(54) **Gleitkontakt-Rollenkopf**
Sliding contact roller head
Tête à rouleau à contact glissant

(30) Priorität: 29.05.1990 CH 1818/90
(43) Veröffentlichungstag der Anmeldung: 04.12.1991
(73) Patentinhaber: ELPATRONIC AG, CH-6300 Zug (CH)
(72) Erfinder: Portmann, Niklaus, CH-5454 Bellikon (CH); D'Aniello, Alfonso, CH-8967 Widen (CH); Taiana, Peter, CH-5053 Staffelbach (CH); Urech, Werner, CH-8434 Kaiserstuhl (CH)

(56) Entgegenhaltungen:
- EP-A- 0 182 328
- CH-A- 636 548
- DE-B- 1 615 215
- US-A- 4 188 523

## Beschreibung

Die Erfindung betrifft einen Rollenkopf für eine Widerstandsnahtschweißmaschine, mit einem Stator, mit einer Elektrodenrolle, die als Rotor an dem Stator drehbar gelagert ist, mit einer Gleitkontakt-Stromübertragungseinrichtung, die zwischen Stator und Rotor angeordnet und an wenigstens einen von ihnen durch Federkraft angepreßt ist, und mit Kanälen zum Hindurchleiten eines Kühlmittels, die im Stator, im Rotor und in der Gleitkontakt-Stromübertragungseinrichtung vorgesehen sind.

Ein solcher Rollenkopf ist aus der US-A-3 546 655, aus der US-A-3 596 225 und aus der DE-A-16 15 215 bekannt.

Solche Rollenköpfe mit innenliegender Gleitkontakt-Stromübertragungseinrichtung zwischen Stator und Rotor könnten zwar als Ersatz für die bislang verwendeten Flüssigkeits-Rollenköpfe ins Auge gefaßt werden, die Praxis hat aber gezeigt, daß sie dafür in Wirklichkeit nicht geeignet sind.

Flüssigkeits-Rollenköpfe (CH-A-636 548, US-A- 4 188 523) werden zum Schweißen innerhalb von engen Dosenkörpern benutzt. Zwischen dem Stator und dem Rotor ist ein Ringspalt vorgesehen, in welchem sich ein flüssiges Metall befindet, beispielsweise Quecksilber oder eine Galliumlegierung, das zur Stromübertragung von dem Stator auf den Rotor dient. Da solche Rollenköpfe eine sorgfältige Abdichtung und eine ständige Kontrolle dieser Abdichtung erfordern und da die verwendeten flüssigen Metalle kein besonders guter Wärmeleiter und im Vergleich zu Kupfer auch keine guter elektrischer Stromleiter sind und sich überdies bei der Verwendung einer Galliumlegierung Probleme dadurch einstellen können, daß diese Metallegierung bereits bei nicht sehr weit unter der Raumtemperatur liegenden Temperaturen verfestigt, sind solche Flüssigkeits-Rollenköpfe bereits durch einen Rollenkopf mit außenliegender Gleitkontakt-Stromübertragungseinrichtung ersetzt worden (EP-B1-0 182 328). Dieser bekannte Rollenkopf, der durch die Anmelderin entwickelt worden ist, beseitigt zwar die erwähnten Probleme der Flüssigkeits-Rollenköpfe, verlangt jedoch eine Umkonstruktion des Schweißarms der Widerstandsnahtschweißmaschine, wenn er anstelle des sonst bei dieser Maschine eingesetzten Flüssigkeits-Rollenkopfes eingebaut werden soll.

Die eingangs erwähnten bekannten Gleitkontakt-Rollenköpfe könnten zwar hinsichtlich der Einbaumaße anstelle von Flüssigkeits-Rollenköpfen eingesetzt werden, sie sind jedoch hinsichtlich des Stromübertragungsvermögens und der Lebensdauer den Flüssigkeits-Rollenköpfen unterlegen, weil sie aufwendige Bürstenkonstruktionen als Gleitkontakt- Stromübertragungseinrichtung oder als Bestandteil derselben aufweisen. Die Federn, die zum Anpressen der Bürsten erforderlich sind, führen noch zu folgendem weiteren Nachteil.

Bei dem Rollenkopf gemäß der US-A-3 546 655 sind am Stator zwei horizontale Zapfen vorgesehen, auf denen Bürstensegmente kranzförmig angeordnet sind und dabei durch O-Ringe zusammengehalten werden. Zwischen beiden Bürstenkränzen trägt der Rotor konvexe Leiterteile. Zwischen den konvexen Leiterteilen und den Bürstenkränzen sind weitere Leiterteile vorgesehen, die auf ihrer den Bürstenkränzen zugewandten Seite plan und auf der entgegengesetzten Seite konkav ausgebildet sind. Horizontal angeordnete Druckfedern pressen die Bürstensegmente gegen die weiteren Leiterteile und diese damit gegen die konvexen Leiterteile. Bei Exzentrizität oder unrundem Lauf des Rotors können sich zwar die Planflächen zwischen den Bürstenkränzen und den weiteren Leiterteilen vertikal gegenseitig verschieben und ebenso können die weiteren Leiterteile auf den konvexen Flächen bogenförmige Bewegungen ausführen, an diesen Bewegungen sind jedoch viele Einzelteile beteiligt, und grundsätzlich sind mit Rücksicht auf die hohen elektrischen Ströme, die in solchen Rollenköpfen zwischen Stator und Rotor übertragen werden müssen, alle aufeinander beweglichen Stromübertragungsflächen Verlustquellen, welche die Belastbarkeit der Rollenköpfe vermindern.

Mit dem Gleitkontakt-Rollenkopf nach der US-A-3 596 225 ist versucht worden, diese Probleme zu beseitigen, indem an dem Rotor lediglich eine zylindrische Innenfläche vorgesehen worden ist, mit welcher sämtliche Bürsten, die an dem Stator vorgesehen sind, in Gleitkontakt sind. Jede Bürste wird zu diesem Zweck durch eine radiale Druckfeder, die mittig unter der Bürste angeordnet ist, gegen den Rotor gepreßt. Bei dieser Bürstenkonstruktion und ebenso bei der Bürstenkonstruktion des Gleitkontakt-Rollenkopfes nach der US-A-3 546 655 wird der Kontaktdruck zwischen Bürsten und den diesen zugeordneten Kontaktflächen des Rotors durch Vibrationen, zum Beispiel durch äußere Schläge oder unrunden Lauf, nachteilig beeinflußt. Die Strombelastbarkeit wird dadurch entsprechend verringert. Im übrigen weist auch der Gleitkontakt-Rollenkopf nach der US-A-3 596 225 eine Vielzahl von Bürsten auf, die alle Verschleißteile darstellen und somit eine häufige Wartung des Rollenkopfes erforderlich machen.

Bei dem Gleitkontakt-Rollenkopf nach der DE-A-16 15 215 ist statt Bürsten eine mit dem Stator an ihrem inneren Rand verschweißte, federnde, ringförmige Balgmembran als stromführendes Element vorgesehen, die mit ihrem äußeren abgebogenen Rand auf dem inneren ausgerundeten Teil eines ruhenden, scheibenförmig ausgebildeten Gleitkontaktes ruht und diesen an den Rotor preßt.

Aufgabe der Erfindung ist es, einen Rollenkopf der eingangs genannten Art so zu verbessern, daß er mit den bislang verwendeten Flüssigkeits-Rollenköpfen, die er ersetzen soll, hinsichtlich Einbaumaßen, Stromübertragungsvermögen und Lebensdauer vergleichbar ist und außerdem in der Gleitkontakt-Stromübertragungseinrichtung zwischen Stator und Rotor einen Kontaktdruck aufweist, der durch Vibrationen, Exzentrizität, usw. praktisch unbeeinflußt bleibt.

Diese Aufgabe ist ausgehend von einem Rollenkopf der eingangs genannten Art erfindungsgemäß dadurch gelöst, daß die Gleitkontakt-Stromübertragungseinrichtung aus wenigstens einer kreisringförmigen Scheibe besteht, die sich radial zwischen Rotor und Stator erstreckt und in ihrem zwischen Innen- und Außenumfang gelegenen Stegteil flexibel ausgebildet ist.

Bei dem Rollenkopf nach der Erfindung wird der Schweißstrom vom Schweißarm der Widerstandsnahtschweißmaschine über den in diesem festgeklemmten Stator über wenigstens eine flexible Gleitkontakt-Scheibe auf die Elektrodenrolle übertragen. Da die Gleitkontakt-Scheibe in ihrem Stegteil flexibel ist, kann der Stegteil bei Exzentrizität, Vibrationen usw. axial und radial ausweichen, so daß der Gleitkontakt-Umfangsbereich der Scheibe, über den die Stromübertragung erfolgt, von solchen äußeren mechanischen Einflüssen unbeeinflußt bleibt und somit auch der Kontaktdruck praktisch nicht nachteilig beeinflußt wird. Darüber hinaus kommt der Rollenkopf nach der Erfindung mit einer minimalen Anzahl von Einzelteilen aus, was die Herstellungskosten, den Wartungsaufwand und den Verschleiß beträchtlich verringert.

Vorteilhafte Ausgestaltungen der Erfindung bilden den Gegenstand der Unteransprüche.

In der Ausgestaltung der Erfindung nach Anspruch 2 ist der Aufbau des Stegteils besonders einfach und ermöglicht eine problemlose Übertragung von sehr hohen Schweißströmen.

In der Ausgestaltung der Erfindung nach Anspruch 3, die den Ersatz des Kupfergeflechts durch eine dünnwandige metallische Membran vorsieht, ist es möglich, die Scheibe einstückig mit dem Stator oder Rotor herzustellen.

In der Ausgestaltung der Erfindung nach den Ansprüchen 4 und 5 wird auch bei größerer Dicke der Scheibe die Beweglichkeit von deren Stegteil in Achsrichtung durch die Ausbildung des Stegteils mit Speichen gewährleistet.

In der Ausgestaltung der Erfindung nach Anspruch 6 wird eine intensive Kühlung der Elektrodenrolle und der Gleitkontaktflächen dadurch sichergestellt, daß die als Flügel ausgebildeten Speichen zur Kühlmittelförderung herangezogen werden. Dabei ist es bereits ausreichend, nur einige Speichen als Flügel auszubilden.

In der Ausgestaltung der Erfindung nach Anspruch 7 kann zwar die Scheibe am Stator oder Rotor angeformt sein, wofür sich die bereits erwähnte Ausgestaltung des Rollenkopfes mit einer Membran als Stegteil der Scheibe eignet, die Membran kann aber ohne weiteres auch mit dem Stator oder Rotor verschweißt oder verlötet sein.

Die Ausgestaltung der Erfindung nach Anspruch 8 wird bevorzugt, weil sie die Strombelastung der Gleitkontakt-Stromübertragungseinrichtung auf zwei Scheiben verteilt, also geringere Querschnitte ermöglicht, und weil sich mit einfachen Maßnahmen die Federkraft für den Kontaktdruck erzeugen läßt, beispielsweise durch ein zwischen den beiden Scheiben angeordnetes Tellerfederpaket in der Ausgestaltung der Erfindung nach Anspruch 16 oder durch die Ausbildung der Scheiben selbst als federnde Membranen in der Ausgestaltung der Erfindung nach Anspruch 17.

Die Ausgestaltungen der Erfindung nach den Ansprüchen 10 bis 14 ermöglichen die zweckmäßige Wahl von im Gleitkontaktbereich eingesetzten Gleitkontaktringen. So lassen sich Kontaktringe aus Hartsilber fest mit einem flexiblen Kupfergeflecht verbinden (zum Beispiel durch Elektronenstrahlschweißung), die am Außenumfang wiederum in kupferne Kontaktringe gefaßt (verschweißt) sind. Anstelle von Hartsilber kann auch eine Verbindung von Silber/Graphit oder aber versilbertes oder vergoldetes Kupfer zur Anwendung gelangen. Wenn mit Zwischenringen gearbeitet wird, so werden anstelle der Silberkontaktringe Kupferkontaktringe oder versilberte oder vergoldete Kupferkontaktringe an das flexible Kupfergeflecht geschweißt oder gelötet, und die Hartsilber- oder Silber/Graphit- oder versilberten/vergoldeten Kupfer-Kontaktringe werden als billige Verschleißteile auf den Stator oder Rotor geklemmt.

Die Ausgestaltungen der Erfindung nach den Ansprüchen 18 bis 21 stellen bevorzugte Ausführungsformen mit jeweils zwei Gleitkontakt-Scheiben dar. Wenn die Stegteile aus Kupfergeflecht bestehen, wird, wie erwähnt, zweckmäßig ein Tellerfederpaket zur Erzeugung der Federkraft zwischen zwei Scheiben angeordnet. Wenn die Stegteile als Membranen aus einem federnden Werkstoff hergestellt sind und daher gleichzeitig als Feder verwendet werden können, ist in der Ausgestaltung der Erfindung nach Anspruch 20 oder 21 der gegenseitige Abstand der Gleitkontaktflächen der Zwischenringe im Einbauzustand kleiner als der Abstand, den die Gleitkontaktflächen der Axialgleitkontaktringe im nichteingebauten Zustand aufweisen. Jede Membran ist daher in der Lage, die Federkraft für den Kontaktdruck selbst zu erzeugen.

In der Ausgestaltung der Erfindung nach den Ansprüchen 22 und 23 erfolgt die Kühlung des Rollenkopfes durch eine spezielle ölhaltige Emulsion, die die Gleitkontaktflächen nicht nur intensiv kühlt, sondern zusätzlich auch schmiert. Gegenüber gewöhnlichem Wasser hat ein solches Kühlmittel den Vorteil, daß die Kontakte nicht durch Kalk oder sonstige Verunreinigungen verschmutzt werden. Die verwendete Emulsion ist stabil und vor allem lebensmitteltauglich. Die bei der Kühlung durch die Scheibe(n) hindurchgehende Kühlmittelströmung läßt sich auf einfache Weise durch die Lage und die Größe der Schlitze steuern, die in dem Stegteil zur Bildung der Speichen gemäß der Ausgestaltung der Erfindung nach Anspruch 5 vorgesehen sind.

Ausführungsbeispiele der Erfindung werden im folgenden unter Bezugnahme auf die Zeichnungen näher beschrieben. Es zeigen
- Fig. 1: eine erste Ausführungsform eines Rollenkopfes nach der Erfindung,
- Fig. 2: eine zweite Ausführungsform des Rollenkopfes nach der Erfindung,
- Fig. 3: eine dritte Ausführungsform des Rollenkopfes nach der Erfindung,
- Fig. 4: als Einzelheit eine Ansicht in Richtung eines Pfeils IV in Fig. 3,
- Fig. 5: eine schematische Teilansicht zur Veranschaulichung einer vierten Ausführungsform des Rollenkopfes nach der Er-findung,
- Fig. 6: eine schematische Teilansicht zur Veranschaulichung einer fünften Ausführungsform des Rollenkopfes nach der Er-findung, und
- Fig. 7a-7g: verschiedene Ausbildungen von bei dem Rollenkopf nach der Erfindung verwendbaren Speichenmembranen.

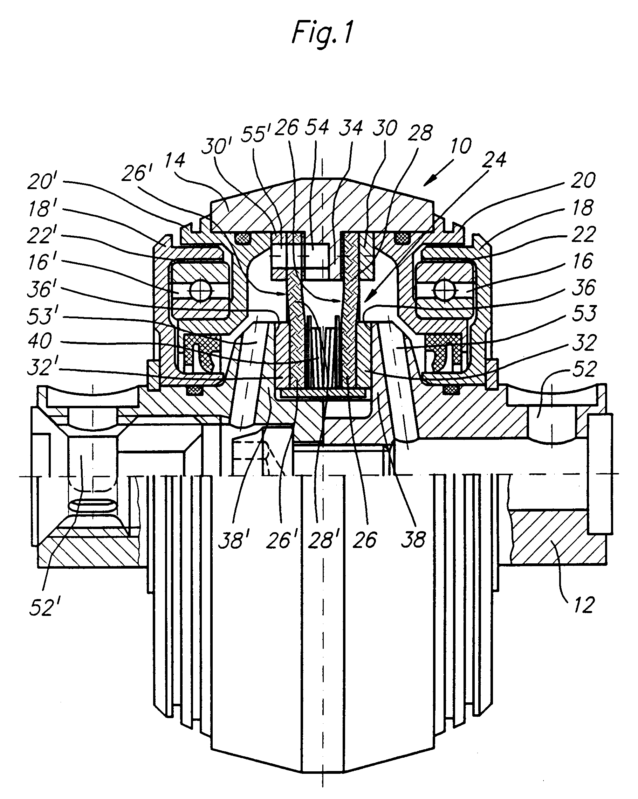

Fig. 1 zeigt eine Schnittansicht einer ersten Ausführungsform eines insgesamt mit 10 bezeichneten Rollenkopfes für eine nicht dargestellte Widerstandsnahtschweißmaschine zum Widerstands-Rollennahtschweißen von Dosenkörpern. Der Rollenkopf 10 hat einen in dem dargestellten Ausführungsbeispiel als zweiteilige Achse ausgebildeten Stator 12, auf dem ein Rotor 14 mittels Kugellagern 16, 16' drehbar gelagert ist. (Gleiche, aber mit einem hochgesetzten Strich versehene Bezugszahlen bezeichnen jeweils das andere Teil eines Paares von gleich ausgebildeten Teilen.) Für diese Lagerung weist der Rollenkopf 10 auf dargestellte Weise am Stator 12 befestigte Lageraußengehäuse 18, 18' und am Rotor 14 befestigte Lagerinnengehäuse 20, 20' auf, zwischen denen die Kugellager 16, 16' angeordnet sind. Die Lageraußen- und -innengehäuse 18, 18' bzw. 20, 20' bestehen aus nichtrostendem, antimagnetischem Stahl und sind somit wirbelstromverlustarm ausgebildet. In allen dargestellten Ausführungsbeispielen sind die Kugellageraußenringe jeweils durch eine Isolation 22, 22' von dem Lageraußengehäuse 18 bzw. 18' elektrisch getrennt. Statt dessen oder zusätzlich könnten auch die Kugellagerinnenringe von dem Lagerinnengehäuse 20, 20' durch eine Isolation (nicht dargestellt) getrennt sein.

Der Stator 12 wird an dem freien Ende eines ebenfalls nicht dargestellten Schweißarms der Widerstandsnahtschweißmaschine elektrisch gut leitend festgeklemmt. Der Schweißarm und der Stator 12 führen im Betrieb der Widerstandsnahtschweißmaschine den Schweißstrom und bestehen deshalb (ebenso wie der Rotor 14) aus elektrisch gut leitendem Werkstoff, vorzugsweise aus Kupfer. Dieser Schweißstrom ist von dem Stator 12 auf den Rotor 14 zu übertragen, der ihn, vorzugsweise über einen nicht dargestellten Elektrodendraht, zur Schweißstelle überträgt. Zur Stromübertragung zwischen Stator und Rotor ist eine insgesamt mit 24 bezeichnete Gleitkontakt-Stromübertragungseinrichtung vorgesehen, die in dem in Fig. 1 dargestellten Ausführungsbeispiel zwei kreisringförmige Scheiben 26, 26' aufweist, welche sich in gegenseitigem axialen Abstand radial zwischen Rotor und Stator erstrecken und in ihrem zwischen Innen- und Außenumfang gelegenen Stegteil 28, 28' flexibel ausgebildet sind.

Die beiden flexiblen Gleitkontakt-Scheiben 26, 26' bestehen jeweils aus einem Kupfergeflecht, an dem am Außenumfang der Scheibe jeweils ein Kontaktring 30, 30' auf dem Stegteil 28, 28' axial befestigt (z.B. verschweißt) ist und am Innenumfang der Scheibe jeweils ein Axialgleitkontaktring 32, 32' auf dem Stegteil axial befestigt (z.B. elektronenstrahlverschweißt) ist. Der Rotor 14 hat an seinem Innenumfang einen Flansch 34, an dem die Scheiben 26, 26' mittels nicht dargestellter Schrauben oder lediglich durch Pressen elektrisch gut leitend befestigt sind. Jeder Axialgleitkontaktring 32, 32' ist mit einer zugeordneten ringförmigen Kontaktfläche 36, 36' des Stators 12 in Gleitkontakt. Jede Hälfte des Stators 12 ist mit einem Ringbund 38 bzw. 38' versehen, an denen die ringförmigen Kontaktflächen 36 bzw. 36' gebildet sind. Zum Anpressen der Scheiben 26, 26' an den Stator 12 ist zwischen den Scheiben eine Federeinrichtung in Form eines Tellerfederpakets 40 vorgesehen. Die Tellerfedern erzeugen den notwendigen Kontaktdruck zwischen den Axialgleitkontaktringen 32, 32' und den diesen zugeordneten ringförmigen Kontaktflächen 36, 36' des Stators 12.

Der Innenraum zwischen dem Stator 12 und dem Rotor 14 ist auf in Fig. 1 dargestellte Weise mittels O-Ringen und Wellendichtungen abgedichtet. Da der Rotor 14 und die Gleitkontaktflächen intensiv gekühlt werden müssen, sind zum Hindurchleiten eines Kühlmittels durch den Rollenkopf 10 Kanäle 52, 52' und 53, 53' im Stator 12, Kanäle 54 im Rotor 14 und Kanäle 55' in den flexiblen Gleitkontakt-Scheiben vorgesehen (den Kanälen 55' entsprechende Kanäle, die in der Scheibe 26 vorgesehen sind, sind in Fig. 1 nicht sichtbar). Kühlmittel wird im Betrieb der Widerstandsnahtschweißmaschine in den Kanal 52 eingeleitet und strömt durch den Kanal 53, durch die nicht sichtbaren Kanäle der Scheibe 26, durch die Kanäle 54 und 55' und schließlich zurück durch die Kanäle 53' und 52'.

Zur Kühlung und gleichzeitigen Schmierung wird eine stabile und vor allem lebensmitteltaugliche Emulsion als Kühlmittel verwendet, die aus 82% Wasser, 15% Rapsöl und 3% Emulgator besteht. Der Emulgator ML-55-F der Hefti AG, Zürich, hat sich als besonders geeignet erwiesen. Nähere Einzelheiten über diesen Emulgator finden sich auf dem technischen Datenblatt Nr. 3.201-d der Hefti AG.

Zur Herstellung der Emulsion wird der Emulgator, der als Konzentrat vorliegen kann, dem Wasser zugegeben. Danach wird mit einem Rührstab gut umgerührt, bis sich der Emulgator vollständig im Wasser gelöst hat. Nun wird vorsichtig das Rapsöl dazugemischt. Zum Schluß muß die Emulsion sehr kräftig und lange (wenigstens 8 Minuten) mit einem Mischwerk vermischt werden, um eine gute Stabilität der Emulsion zu erhalten. Zur Verlängerung der Haltbar-keit kann der Emulsion gegebenenfalls ein Stabilisator bei-gemischt werden (wie bei Kühl- und Schmiermitteln von Werkzeugmaschinen).

Die Temperatur des Kühlmittels bei dessen Eintritt in den Rollenkopf darf 20 bis 25 °C betragen, womit eine Kondenswasserbildung weitgehendst verhindert wird.

Die vorstehend beschriebene Gleitkontakt-Stromübertragungseinrichtung 24 zwischen Rotor und Stator des Rollenkopfes ermöglicht eine radiale und eine axiale Relativbewegung derselben, ohne daß dadurch der Kontaktdruck nachteilig beeinflußt wird. Für diese Relativbeweglichkeit sorgt das Kupfergeflecht der Scheiben 26, 26'. Für das Konstanthalten des Kontaktdruckes sorgt das Tellerfederpaket 40, auf dessen Federkraft die genannte Relativbeweglichkeit keinen Einfluß hat.

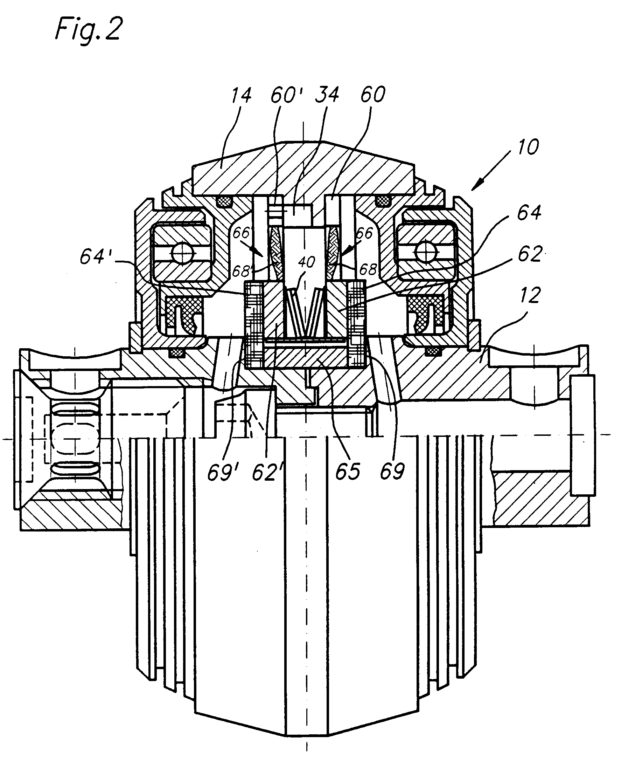

Mögliche Alternativen zu der in Fig. 1 dargestellten Gleitkontakt-Stromübertragungseinrichtung 24 werden nun im folgenden unter Bezugnahme auf die Figuren 2 bis 7 beschrieben.

Fig. 2 zeigt eine zweite Ausführungsform des Rollenkopfes 10, bei dem jede Scheibe 66, 66' am Innen- und Außenumfang mit einem Kontaktring 62, 62' bzw. 60, 60' versehen ist, der an den Stegteil 68, 68' radial angesetzt ist. Die inneren Kontaktringe 62, 62' bilden wiederum Axialgleitkontaktringe, die aber im Gegensatz zu denen nach Fig. 1 nicht aus Hartsilber oder Silber/Graphit bestehen, sondern aus Kupfer und an das flexible Kupfergeflecht, das den Stegteil 68, 68' der Scheiben 66, 66' bildet, angeschweißt oder angelötet sind. Die zugeordneten ringförmigen Kontaktflächen 36, 36', die bei dem Ausführungsbeispiel nach Fig. 1 an den Ringbunden 38, 38' gebildet sind, sind bei dem Ausführungsbeispiel nach Fig. 2 an mit dem Stator 12 verbunden Zwischenringen 64, 64' aus Hartsilber oder Silber/Graphit oder versilbertem/vergoldetem Kupfer gebildet. Die Zwischenringe 64, 64' sind als billige Verschleißteile auf den Stator 12 geklemmt. Zu diesem Zweck ist zwischen ihnen ein Klemmring 65 angeordnet, der bei zusammengebautem Stator 12 die Zwischenringe 64, 64' gegen zwei Ringschultern 69, 69' desselben preßt. Auch bei dem Ausführungsbeispiel nach Fig. 2 sind die Kontaktringe 60, 60' und der Flansch 34 mit (nicht dargestellten) Kanälen zum Hindurchleiten des Kühlmittels versehen. Im übrigen entspricht der Aufbau der Ausführungsform des Rollenkopfes nach Fig. 2 der nach Fig. 1 und braucht daher nicht weiter beschrieben zu werden.

Der Vorteil der Ausführungsform nach Fig. 2 gegenüber der nach Fig. 1 ist darin zu sehen, daß Kontaktringe aus Kupfer mit dem Kupfergeflecht besser verschweiß- oder verlötbar sind und daß einfache, nicht zu verlötende oder zu verschweißende Zwischenringe aus Hartsilber oder Silber/Graphit oder versilbertem/vergoldetem Kupfer benutzt werden können, die darüber hinaus beidseitig verwendbar sind. An der Grenzfläche zwischen den Zwischenringen 64, 64' und dem Stator 12 sind zwar zusätzliche Kontaktübergänge vorhanden, das sind jedoch stationäre Kontaktübergänge, das heißt keine Gleitkontaktübergänge, so daß sie sich nicht in nennenswerten zusätzlichen Verlusten auswirken.

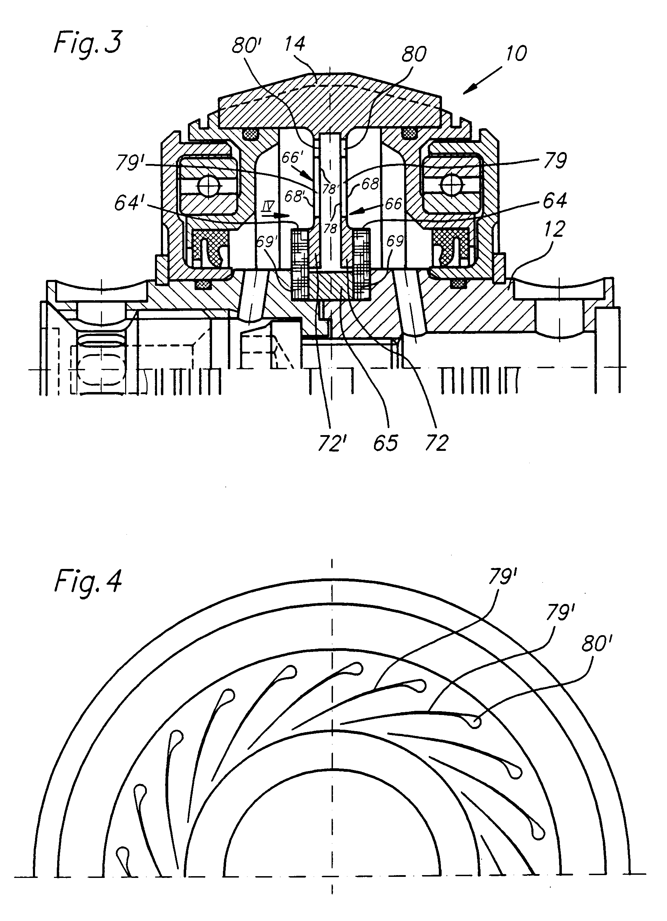

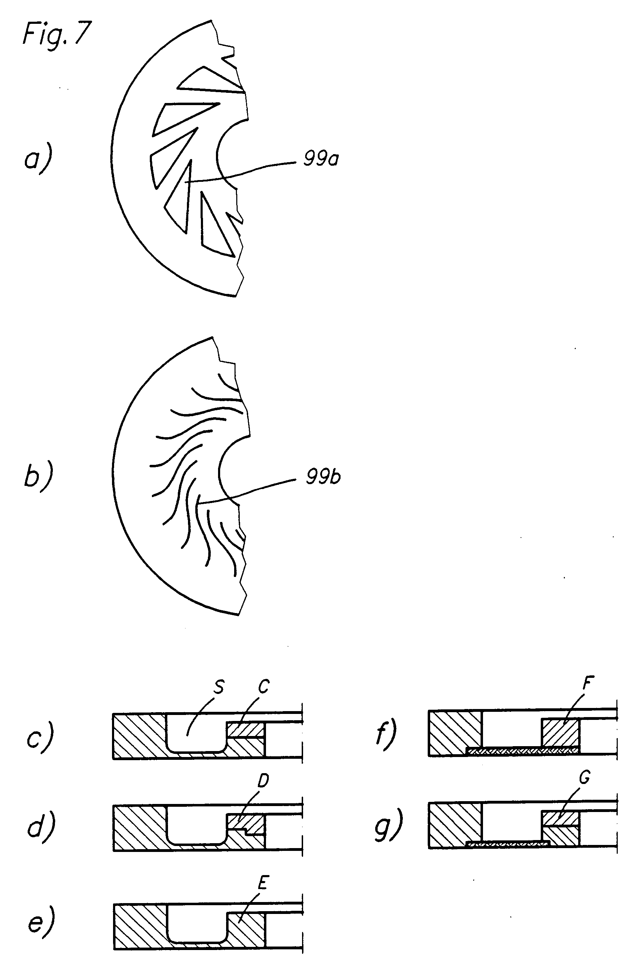

Fig. 3 zeigt eine dritte Ausführungsform des Rollenkopfes 10, bei dem das Kupfergeflecht der Stegteile 68, 68' bei der Ausführungsform nach Fig. 2 durch dünnwandige metallische Membranen 78, 78' der in Fig. 4 oder 7 dargestellten Art ersetzt worden ist. Die Anordnung der Zwischenringe 64, 64' und des diesen zugeordneten Klemmringes 65 entspricht der nach Fig. 2 und braucht daher nicht erneut beschrieben zu werden.

Bei der Ausführungsform nach Fig. 3 ist der Rotor 14 wiederum einteilig ausgebildet. Die Membranen 78, 78' sind an dem Rotor 14 angeformt, das heißt einstückig mit demselben hergestellt. An den Membranen 78, 78' sind die Axialgleitkontaktringe 72, 72' angeformt. Diese Ausbildung mit angeformten Kontaktringen dient lediglich zur Erläuterung eines Ausführungsbeispiels, denn es ist ohne weiteres möglich, die Membranen 78, 78' als gesonderte Teile herzustellen und mit den Axialkontaktringen 72, 72' und ebenso mit dem Rotor 14 zu verlöten oder zu verschweißen. Bei dem dargestellten Ausführungsbeispiel sind Rotor, Membranen und Axialgleitkontaktringe aus dem Vollen spanabhebend hergestellt worden.

Um die Relativbeweglichkeit zwischen dem Rotor 14 und dem Stator 12 in axialer Richtung zu gewährleisten, sind die Membranen 78, 78' mit Schlitzen 79, 79' versehen. Diese Schlitze sind haarfein mit dem Laser oder auf andere geeignete Weise in die Membranen geschnitten worden. Zum Hindurchleiten des Kühlmittels sind die Membranen 78, 78' zusätzlich mit Löchern 80, 80' versehen.

Bei dem Ausführungsbeispiel nach Fig. 3 bestehen die Membranen 78, 78' (ebenso wie der Rotor 14 und die Axialgleitkontaktringe 72, 72') aus einem federnden Werkstoff und können daher gleichzeitig als Feder verwendet werden. Dadurch wird das Tellerfederpaket 40 überflüssig. Zum Erzeugen der Scheibenanpreßfederkraft werden die Abstände zwischen den Kontaktflächen der Axialgleitkontaktringe 72, 72' und die lichte Weite zwischen den Zwischenringen 64, 64' so gewählt, daß im Einbauzustand jede Membran als Feder vorgespannt ist, also den notwendigen Kontaktdruck selbst erzeugt. Durch die Lage der Schlitze 79, 79' in den Membranen 78, 78' können die Federkonstante und die Dicke der Membranen in weitem Bereich angepaßt werden. Als Werkstoff kommt eine Kupfer-Kobalt-Beryllium-Legierung in Frage. Bei Bedarf können die Federeigenschaften durch Erhöhung des Berylliumgehaltes der Legierung verbessert werden, was allerdings mit einer Verschlechterung der elektrischen Leitfähigkeit verbunden sein kann.

Der Kühlmitteldurchfluß kann durch entsprechende Ausbildung der Schlitze und insbesondere der Löcher 80, 80' gesteuert werden.

Ein besonderer Vorteil der Ausführungsform nach Fig. 3 besteht darin, daß der Rotor 14 mit angeformten Membranen 78, 78' und Axialgleitkontaktringen 72, 72' als Verschleißteil leicht ausgewechselt werden kann. Die Zwischenringe 64, 64' brauchen bei Verschleiß zunächst lediglich gewendet zu werden. Diese Ausführungsform zeichnet sich durch eine minimale Anzahl von Einzelteilen und durch eine klare Teilung von Verschleiß- und wiederverwendbaren Teilen aus.

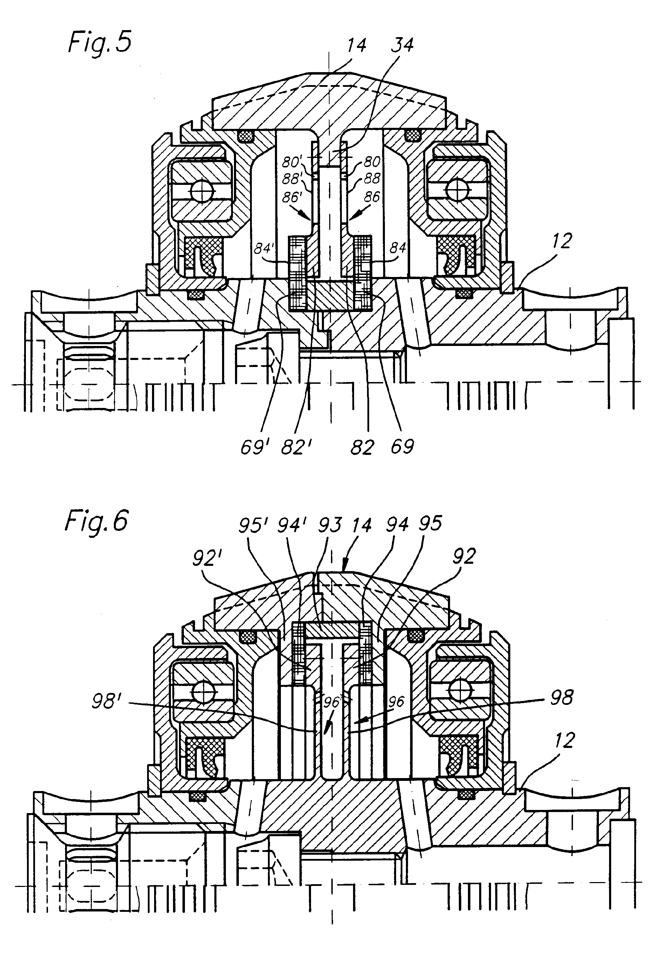

Die Fig. 5 und 6 zeigen Varianten der Ausführungform nach Fig. 3. Bei der Ausführungsform des Rollenkopfes nach Fig. 5 sind die Scheiben 86, 86' in Form von Membranen 88, 88' mit Axialgleitkontaktringen 82, 82' als gesonderte Teile ausgebildet und an dem Flansch 34 des Rotors 14 befestigt, zum Beispiel mittels Schrauben (symbolisch dargestellt). Die Axialgleitkontaktringe 82, 82' liegen an Zwischenringen 84, 84' an. Im übrigen entspricht diese Ausführungsform der nach den Fig. 3 und 4 und braucht daher nicht weiter beschrieben zu werden.

Bei der Ausführungsform des Rollenkopfes nach Fig. 6 ist der Stator 12 einteilig und der Rotor 14 zweiteilig ausgebildet, also umgekehrt wie in Fig. 3. Ebenso sind im Gegensatz zu Fig. 3 die Scheiben 96, 96' mit ihren Membranen 98, 98' nicht am Rotor 14, sondern am Stator 12 angeformt, und die Zwischenringe 94, 94' und deren Klemmring 93 sind am Rotor 14 statt am Stator 12 vorgesehen, wie es in Fig. 6 dargestellt ist. Die an den Membranen 98, 98' angeformten Axialgleitkontaktringe 92, 92' liegen an den Zwischenringen 94, 94' an, die sich ihrerseits an Ringbunden 95, 95' des Rotors 14 abstützen. Ansonsten entspricht die Ausführungsform nach Fig. 6 der nach den Fig. 3 und 4 und braucht daher ebenfalls nicht näher beschrieben zu werden. Die auftretende Reibung dürfte bei der Ausführungsform nach Fig. 6 etwas größer sein als bei der nach den Fig. 3 und 4.

Durch das Vorsehen der Schlitze 79, 79' in den Membranen 78, 78' nach Fig. 4 werden zwischen den Schlitzen Speichen gebildet, die Membranen also in sogenannte Speichenmembranen verwandelt. Fig. 7 zeigt verschiedene alternative Ausführungsformen von solchen Speichenmembranen.

Die Fig. 7a und 7b zeigen zwei Arten von schlitzartigen Ausnehmungen 99a bzw. 99b in den Membranen. Die Fig. 7c-7g zeigen verschiedene Querschnittansichten von Speichenmembranen der in den Fig. 7a und 7b dargestellten Art. Die schlitzartigen Ausnehmungen 99a, 99b können mittels Laser geschnitten worden sein. Gemäß Fig. 7e kann der am Innenumfang vorgesehene Axialgleitkontaktring E ein angeformter Teil der Membran sein. Gemäß den Fig. 7c und 7d ist der Axialgleitkontaktring C bzw. D jeweils ein auf die Membran auf-gesetzter und mit derselben verbundener Ring. Gemäß den Fig. 7f und 7g kann ein solcher Axialgleitkontaktring F bzw. G am Innenumfang der Membran angelötet bzw. mit derselben durch Sintern verbunden sein.

Die Ausführungsvarianten nach Fig. 7 zeigen überdies, daß sich die Speichen als schaufelblattartige Flügel S zur Kühlmittelförderung ausbilden lassen, wie es insbesondere in den Fig. 7c-7e angedeutet ist.

Unter Bezugnahme auf die Zeichnungen sind vorstehend zwar lediglich Ausführungsformen beschrieben worden, bei denen die Gleitkontakt-Stromübertragungseinrichtung 24 zwei Scheiben aufweist, es sind jedoch auch Ausführungsformen mit jeweils einer Scheibe möglich. Das ist lediglich eine Frage des verfügbaren Platzes und der verfügbaren Stromübertragungsquerschnitte. Bei der Ausführungsform nach Fig. 1 könnte in diesem Fall an dem Flansch 34 statt der zweiten Scheibe eine Art Tellerfeder oder ein Federpaket befestigt sein, das für den nötigen Kontaktdruck der Scheibe an der Kontaktfläche 36 oder 36' sorgt. Entsprechendes würde für die Ausführungsform nach Fig. 2 gelten. Bei den Ausführungsformen nach den Fig. 3-7 würde die Erzeugung der Federkraft keine zusätzliche Federeinrichtung erfordern, weil bei diesen Ausführungsformen ohnehin jede Scheibe selbst als Feder ausgebildet ist.

Wenn bei den Ausführungsformen nach den Fig. 3 bis 7 die Membranen nicht selbst als Federn ausgebildet sind, kann ein Tellerfederpaket wie das Tellerfederpaket 40 nach den Fig. 1 und 2 zur Erzeugung der für den Kontaktdruck notwendigen Federkraft vorgesehen werden.

## Patentansprüche

1. Rollenkopf für eine Widerstandsnahtschweißmaschine, mit einem Stator (12), mit einer Elektrodenrolle, die als Rotor (14) an dem Stator (12) drehbar gelagert ist, mit einer Gleitkontakt-Stromübertragungseinrichtung (24), die zwischen Stator (12) und Rotor (14) angeordnet und an wenigstens einen von ihnen durch Federkraft angepreßt ist, und mit Kanälen (52, 53, 54) zum Hindurchleiten eines Kühlmittels, die im Stator (12), im Rotor (14) und in der Gleitkontakt-Stromübertragungseinrichtung (24) vorgesehen sind, **dadurch gekennzeichnet,** daß die Gleitkontakt-Stromübertragungseinrichtung (24) aus wenigstens einer kreisringförmigen Scheibe (26; 66; 76; 86; 96) besteht, die sich radial zwischen Rotor (14) und Stator (12) erstreckt und in ihrem zwischen Innen- und Außenumfang gelegenen Stegteil (28; 68; 78; 88; 98) flexibel ausgebildet ist.

2. Rollenkopf nach Anspruch 1, dadurch gekennzeichnet, daß der Stegteil (28; 68) aus einem Kupfergeflecht besteht.

3. Rollenkopf nach Anspruch 1, dadurch gekennzeichnet, daß der Stegteil (78; 88; 98) aus einer dünnwandigen metallischen Membran besteht.

4. Rollenkopf nach Anspruch 3, dadurch gekennzeichnet, daß der Stegteil (78; 88; 98) mit Speichen versehen ist.

5. Rollenkopf nach Anspruch 4, dadurch gekennzeichnet, daß die Speichen durch schlitzartige Ausnehmungen (79'; 99a, 99b) in dem Stegteil (78; 88; 98) gebildet sind.

6. Rollenkopf nach Anspruch 5, dadurch gekennzeichnet, daß die Speichen als Flügel (S) zur Kühlmittelförderung ausgebildet sind.

7. Rollenkopf nach einem der Ansprüche 3 bis 6, dadurch gekennzeichnet, daß die Scheibe (76; 96) am Stator (12) oder Rotor (14) angeformt ist.

8. Rollenkopf nach einem der Ansprüche 1 bis 7, dadurch gekennzeichnet, daß die Gleitkontakt-Stromübertragungseinrichtung (24) aus zwei kreisringförmigen Scheiben (26, 26'; 66, 66'; 76, 76'; 86, 86'; 96, 96') besteht, die gegenseitigen axialen Abstand aufweisen.

9. Rollenkopf nach einem der Ansprüche 1 bis 8, dadurch gekennzeichnet, daß jede Scheibe (26, 26'; 66, 66'; 76, 76'; 86, 86'; 96, 96') wenigstens am Innen- oder Außenumfang mit einem Kontaktring (30, 30'; 32, 32'; 60, 60'; 62, 62'; 72, 72'; 82, 82'; 92, 92') versehen und am anderen Umfang am Rotor (14) oder Stator (12) befestigt ist.

10. Rollenkopf nach Anspruch 9, dadurch gekennzeichnet, daß jede Scheibe (26, 26') am Innen- und Außenumfang mit einem Kontaktring (30, 30', 32, 32') versehen ist, der auf dem Stegteil (28, 28') axial befestigt ist.

11. Rollenkopf nach Anspruch 9, dadurch gekennzeichnet, daß jede Scheibe (66, 66') am Innen- und Außenumfang mit einem Kontaktring (60, 60', 62, 62') versehen ist, der an den Stegteil (68, 68') radial angesetzt ist.

12. Rollenkopf nach einem der Ansprüche 9 bis 11, dadurch gekennzeichnet, daß pro Scheibe (26, 26'; 66, 66'; 76, 76'; 86, 86'; 96, 96') wenigstens ein Kontaktring (32, 32'; 62, 62'; 72, 72'; 82, 82'; 92, 92')mit einer ringförmigen Kontaktfläche (36, 36') des Stators (12) oder Rotors (14) in axialem Gleitkontakt ist.

13. Rollenkopf nach Anspruch 12, dadurch gekennzeichnet, daß jeder Axialgleitkontaktring (32, 32'; 62, 62'; 72, 72'; 82, 82'; 92, 92') aus Hartsilber oder Silber/Graphit oder versilbertem/vergoldetem Kupfer und jede zugeordnete ringförmige Kontaktfläche (36, 36') aus Kupfer oder vergoldetem Kupfer besteht.

14. Rollenkopf nach Anspruch 12, dadurch gekennzeichnet, daß jeder Axialgleitkontaktring (32, 32'; 62, 62'; 72, 72'; 82, 82'; 92, 92') aus Kupfer besteht und jede zugeordnete ringförmige Kontaktfläche (36, 36') an einem mit dem Stator (12) oder Rotor (14) verbundenen Zwischenring (64, 64'; 84, 84'; 94, 94') aus Hartsilber oder Silber/Graphit oder versilbertem/vergoldetem Kupfer gebildet ist.

15. Rollenkopf nach einem der Ansprüche 12 bis 14, dadurch gekennzeichnet, daß zum Erzeugen der Scheibenanpreßfederkraft eine Federeinrichtung (40) auf der von der zugeordneten ringförmigen Kontaktfläche (36, 36') abgewandten Seite des Axialgleitkontaktringes (32, 32'; 62, 62') angeordnet ist.

16. Rollenkopf nach Anspruch 15, dadurch gekennzeichnet, daß die Federeinrichtung aus einem Tellerfederpaket (40) besteht.

17. Rollenkopf nach einem der Ansprüche 12 bis 14, dadurch gekennzeichnet, daß zum Erzeugen der Scheibenanpreßfederkraft wenigstens der Stegteil (78, 78'; 88, 88'; 98, 98') aus einem federnden Werkstoff besteht und im Einbauzustand als vorgespannte Feder dient.

18. Rollenkopf nach Anspruch 16, dadurch gekennzeichnet, daß der Stator (12) als zweiteilige Achse ausgebildet ist, die mit zwei Ringbunden (38, 38') versehen ist, deren einander zugewandte Flächen (36, 36') den beiden Axialgleitkontaktringen (32, 32') von zwei Scheiben (26, 26') zugewandt sind, zwischen denen das Tellerfederpaket (40) angeordnet ist, und daß der Rotor (14) einstückig ist und an seinem Innenumfang einen Flansch (34) hat, an dem die beiden Scheiben (26, 26') befestigt sind.

19. Rollenkopf nach Anspruch 18, dadurch gekennzeichnet, daß die einander zugewandten Flächen (36, 36') der beiden Ringbunde (38, 38') die ringförmigen Kontaktflächen des Stators (12) bilden.

20. Rollenkopf nach Anspruch 17, dadurch gekennzeichnet, daß der Stator (12) als zweiteilige Achse ausgebildet ist, die mit zwei Ringschultern (69, 69') versehen ist, auf deren einander zugewandten Flächen Zwischenringe (64, 64'; 84, 84') aus Hartsilber oder Silber/Graphit angeordnet sind, die mit den Axialgleitkontaktringen (62, 62'; 82, 82') von zwei mit dem Rotor (14) verbundenen Scheiben (66, 66'; 86, 86') in Kontakt sind.

21. Rollenkopf nach Anspruch 17, dadurch gekennzeichnet, daß der Rotor (14) zweiteilig ausgebildet und mit Ringbunden (95, 95') versehen ist, auf deren einander zugewandten Flächen Zwischenringe (94, 94') aus Hartsilber oder Silber/Graphit angeordnet sind, die mit den Axialgleitkontaktringen (92, 92') von zwei mit dem Stator (12) verbundenen Scheiben (96, 96') in Kontakt sind.

22. Rollenkopf nach einem der Ansprüche 1 bis 21, dadurch gekennzeichnet, daß das Kühlmittel eine ölhaltige Emulsion ist, die zugleich als Schmiermittel dient.

23. Rollenkopf nach Anspruch 22, dadurch gekennzeichnet, daß die Emulsion aus 82% Wasser, 15% Rapsöl und 3% Emulgator besteht.

## Claims

1. Roller head for a resistance seam welding machine, comprising a stator (12), an electrode roller rotatably mounted as a rotor (14) on the stator (12), a sliding contact current transmission device (24) arranged between the stator (12) and the rotor (14) urged against at least one of them by spring force, and ducts (52, 53 and 54) for passage of a coolant in the stator (12), rotor (14) and sliding contact current transmission device (24), characterised in that the sliding current transmission device (24) comprises at least one circular disc (26;66;76;86;96) which extends radially between the rotor (14) and the stator (12) and is flexibly designed in its intermediate bridging part (28;68;78;88;98) between the inner and outer circumferences.

2. Roller head according to claim 1, characterised in that the bridging part (28;68) consists of a copper braid.

3. Roller head according to claim 1, characterised in that the bridging part (78;88;98) consists of a thin-walled metallic diaphragm.

4. Roller head according to claim 3, characterised in that the bridging part (78;88;98) is provided with spokes.

5. Roller head according to claim 4, characterised in that the spokes are formed by slot-like recesses (79';99a;99b) in the bridging part (78;88;98).

6. Roller head according to claim 5, characterised in that the spokes are in the form of vanes (S) for conveying the coolant.

7. Roller head according to any of claims 3 to 6, characterised in that the disc (79;96) is formed on the stator (12) or rotor (14).

8. Roller head according to any of claims 1 to 7, characterised in that the sliding contact current transmission device (24) consists of two circular discs (26,26';66,66';76,76';86,86';96,96') spaced axially apart from each other.

9. Roller head according to any of claims 1 to 8, characterised in that each disc (26,26';66,66'; 76,76';86,86';96,96') is provided with a contact ring (30,30';32,32';60,60';62,62';72,72';82,82';92,92') on the inner or outer circumference, and at the other circumference is fastened to the rotor (14) or stator (12).

10. Roller head according to claim 9, characterised in that each disc (26,26') is provided on the inner and outer circumferences with a contact ring (30,30';32,32') which is fastened axially on the bridging part (28,28').

11. Roller head according to claim 9, characterised in that each disc (66,66') is provided on the inner and outer circumferences with a contact ring (60,60';62,62') which is set radially against the bridging part (68,68').

12. Roller head according to any of claims 9 to 11, characterised in that for each disc (26,26';66,66';76,,76'; 86,86';96,96') at least one contact ring (32,32';62,62'; 72,72';82,82';92,92') is in axial sliding contact with an annular contact surface (36,36') of the stator (12) or rotor (14).

13. Roller head according to claim 12, characterised in that each axial sliding contact ring (32,32';62,62';72,72';82,82';92,92') is composed of nickel silver or silver/graphite or silver-plated/gold-plated copper and each associated annular contact surface (36,36') is composed of copper or gold-plated copper.

14. Roller head according to claim 12, characterised in that each axial sliding contact ring (32,32';62,62';72,72'; 82,82';92,92') is composed of copper and each associated annular contact surface (36,36') is formed on an intermediate ring (64,64';84,84';94,94') made of nickel silver or silver/graphite or silver-plated/gold-plated copper, which is connected to the stator (12) or rotor (14).

15. Roller head according to any of claims 12 to 14, characterised in that in order to generate a spring force for applying contact pressure to the disc, a spring device (40) is arranged on the side of the axial sliding contact ring (32,32';62,62') that is remote from the associated annular contact surface (36,36').

16. Roller head according to claim 15, characterised in that the spring device is composed of a stack of disc springs (40).

17. Roller head according to any of claims 12 to 14, characterised in that in order to generate a spring force for applying contact pressure to the disc, the bridging part (78,78';88,88';98,98'), at least, is made of a flexible material and serves as a prestressed spring in the inserted position.

18. Roller head according to claim 16, characterised in that the stator (12) is a bipartite axle provided with two annular collars (38,38') whose surfaces (36,36') mutually facing surfaces are directed towards the two axial sliding contact rings (32,32') of two discs (26,26') between which the stack of disc springs (40) is arranged, and in that the rotor (14) is constructed as a single piece and on its inner circumference has a flange (34) onto which the two discs (26,26') are fastened.

19. Roller head according to claim 18, characterised in that the mutually facing surfaces (36,36') of the two annular collars (38,38') form the annular contact surfaces of the stator (12).

20. Roller head according to claim 17, characterised in that the stator (12) is a bipartitle axle provided with two annular shoulders (69,69'), on whose mutually facing surfaces are arranged intermediate rings (64,64';84,84') made of nickel silver or silver/graphite which are in contact with the axial sliding contact rings (62,62';82,82') of two discs (66,66';86,86') connected to the rotor (14).

21. Roller head according to claim 17, characterised in that the rotor (14) is a bipartite construction and is provided with annular collars (95,95') on whose mutually facing surfaces are arranged intermediate rings (94,94') made of nickel silver or silver/graphite which are in contact with the axial siding contact rings (92,92') of two discs (96,96') connected to the stator (12).

22. Roller head according to any of claims 1 to 21, characterised in that the coolant is an emulsion containing oil, which at the same time acts as a lubricant.

23. Roller head according to claim 22, characterised in that the emulsion is 82% water, 15% rapeseed oil and 3% emulsifier.

## Revendications

1. Tête à rouleau pour une machine à souder par résistance en ligne continue, comprenant un stator (12), comprenant un rouleau-électrode logé de façon à pouvoir tourner sous forme d'un rotor (14) sur le stator (12), comprenant un dispositif (24) de conduction de courant à contact glissant disposé entre le stator (12) et le rotor (14) et maintenu en appui sur l'un d'eux au moins par l'action d'un ressort, et comprenant des canaux (52, 53, 54) permettant le passage d'un fluide de refroidissement, ménagés dans le stator (12), le rotor (14) et le dispositif (24) de conduction de courant,
caractérisée en ce que
le dispositif (24) de conduction de courant à contact glissant se compose d'au moins une rondelle annulaire circulaire (26; 66; 86; 96) s'étendant radialement entre le rotor (14) et le stator (12), dont la partie d'âme (28; 68; 78; 88; 98) située entre les périphéries intérieure et extérieure de celle-ci est flexible.

2. Tête à rouleau selon la revendication 1, caractérisée en ce que la partie d'âme (28; 68) est constituée par un treillis en cuivre.

3. Tête à rouleau selon la revendication 1, caractérisée en ce que la partie d'âme (78; 88; 98) est constituée par une membrane métallique mince.

4. Tête à rouleau selon la revendication 3, caractérisée en ce que la partie d'âme (78; 88; 98) est pourvue de rayons.

5. Tête à rouleau selon la revendication 4, caractérisée en ce que les rayons sont définis par des évidements (79'; 99a, 99b) en forme de fentes ménagées dans la partie d'âme (78; 88; 98).

6. Tête à rouleau selon la revendication 5, caractérisée en ce que les rayons sont réalisés sous forme d'aubes (S) assurant l'acheminement du fluide de refroidissement.

7. Tête à rouleau selon l'une des revendications 3 à 6, caractérisée en ce que la rondelle (76; 96) fait corps avec le stator (12) ou le rotor (14).

8. Tête à rouleau selon l'une des revendications 1 à 7, caractérisée en ce que le dispositif (24) de conduction de courant à contact glissant est composé de deux rondelles annulaires circulaires (26, 26'; 66, 66'; 76, 76'; 86, 86'; 96, 96') présentant une distance axiale l'une par rapport à l'autre.

9. Tête à rouleau selon l'une des revendications 1 à 8, caractérisée en ce que chaque rondelle (26, 26'; 66, 66'; 76, 76'; 86, 86'; 96, 96') est pourvue d'une bague de contact (30, 30'; 32, 32'; 60, 60'; 62, 62'; 72, 72'; 82, 82'; 92, 92') disposée au moins à la périphérie intérieure ou à la périphérie extérieure de celle-ci, et est fixée sur le rotor (14) ou sur le stator (12) au niveau de l'autre périphérie.

10. Tête à rouleau selon la revendication 9, caractérisée en ce que chaque rondelle (26, 26') est pourvue, à ses périphéries intérieure et extérieure, d'une bague de contact (30, 30'; 32, 32') fixée axialement sur la partie d'âme (28, 28').

11. Tête à rouleau selon la revendication 9, caractérisée en ce que chaque rondelle (66, 66') est pourvue, à ses périphéries intérieure et extérieure, d'une bague de contact (60, 60'; 62, 62') montée radialement sur la partie d'âme (68, 68').

12. Tête à rouleau selon l'une des revendications 9 à 11, caractérisée en ce que, pour chaque rondelle (26, 26'; 66, 66'; 76, 76'; 86, 86'; 96, 96'), au moins une bague de contact (32, 32'; 62, 62'; 72, 72'; 82, 82'; 92, 92') entre en contact de glissement axialement avec une face de contact annulaire (36, 36') du stator (12) ou du rotor (14).

13. Tête à rouleau selon la revendication 12, caractérisée en ce que chaque bague à contact axial glissant (32, 32'; 62, 62'; 72, 72'; 82, 82'; 92, 92') est en argent dur ou en argent/graphite ou en cuivre argenté/doré, et en ce que chaque face de contact annulaire associée (36, 36') est en cuivre ou en cuivre doré.

14. Tête à rouleau selon la revendication 12, caractérisée en ce que chaque bague à contact axial glissant (32, 32'; 62, 62'; 72, 72'; 82, 82'; 92, 92') est réalisée en cuivre, et en ce que chaque face de contact annulaire associée (36, 36') est constituée par une bague intermédiaire (64, 64'; 84, 84'; 94, 94') en argent dur ou en argent/graphite, ou encore en cuivre argenté/doré, reliée au stator (12) ou au rotor (14).

15. Tête à rouleau selon l'une des revendications 12 à 14, caractérisée en ce qu'afin de créer un effet de ressort assurant l'appui des rondelles, un dispositif à ressort (40) est disposé du côté de la bague à contact axial glissant (32, 32'; 62, 62') qui est situé à l'opposé de la face de contact annulaire associée (36, 36').

16. Tête à rouleau selon la revendication 15, caractérisée en ce que le dispositif à ressort est constitué par un paquet de rondelles-ressorts (40).

17. Tête à rouleau selon l'une des revendications 12 à 14, caractérisée en ce qu'afin de créer un effet de ressort assurant l'appui des rondelles, au moins la partie d'âme (78, 78'; 88, 88'; 98, 98') est réalisée en une matière élastique et agit, à l'état assemblé, comme un ressort précontraint.

18. Tête à rouleau selon la revendication 16, caractérisée en ce que le stator (12) est réalisé sous forme d'un axe en deux parties pourvu de deux collerettes annulaires (38, 38') dont les faces juxtaposées (36, 36') sont orientées face aux deux bagues à contact axial glissant (32, 32') des deux rondelles (26, 26') entre lesquelles est disposé le paquet de rondelles-ressorts (40), et en ce que le rotor (14) est une pièce monobloc comportant à sa périphérie intérieure une collerette (34), sur laquelle sont fixées les deux rondelles (26, 26').

19. Tête à rouleau selon la revendication 18, caractérisée en ce que les deux faces juxtaposées (36, 36') des deux collerettes annulaires (38, 38') forment les faces de contact annulaires du stator (12).

20. Tête à rouleau selon la revendication 17, caractérisée en ce que le stator (12) est réalisé sous forme d'un axe en deux parties pourvu de deux épaulements annulaires (69, 69'), sur les faces juxtaposées desquelles sont disposées des bagues intermédiaires (64, 64'; 84, 84') en argent dur ou en argent/graphite qui entrent en contact avec les bagues à contact axial glissant (62, 62'; 82, 82') de deux rondelles (66, 66'; 86, 86') reliées au rotor (14).

21. Tête à rouleau selon la revendication 17, caractérisée en ce que le rotor (14) est réalisé en deux parties et est pourvu de collerettes annulaires (95, 95') sur les faces juxtaposées desquelles sont disposées des bagues intermédiaires (94, 94') en argent dur ou en argent/graphite qui entrent en contact avec les bagues à contact axial glissant (92, 92') de deux rondelles (96, 96') reliées au stator (12).

22. Tête à rouleau selon l'une des revendications 1 à 21, caractérisée en ce que le fluide de refroidissement est une émulsion contenant de l'huile, servant en même temps de lubrifiant.

23. Tête à rouleau selon la revendication 22, caractérisée en ce que l'émulsion est composée de 82 % d'eau, de 15 % d'huile de colza et de 3 % d'émulsifiant.
